# FASCICULE DE BREVET EUROPEEN

(11) **EP 0 696 967 B1**
(45) Date de publication et mention de la délivrance du brevet: **09.09.1998**
(21) Numéro de dépôt: 95912297.9
(22) Date de dépôt: 10.03.1995
(51) Int. Cl.: B60H 1/00

(54) **DISPOSITIF DE CLIMATISATION DE VEHICULE AVEC BOUCLE DE CHAUFFAGE**
KRAFTFAHRZEUGKLIMAANLAGE MIT HEIZKREISLAUF
VEHICLE AIR CONDITIONING DEVICE HAVING A HEATING LOOP

(30) Priorité: 10.03.1994 FR 9402793
(43) Date de publication de la demande: 21.02.1996
(73) Titulaire: VALEO CLIMATISATION, 78321 La Verrière (FR)
(72) Inventeur: KARL, Stefan, F-75015 Paris (FR)
(74) Mandataire: Gamonal, Didier
(86) Numéro de dépôt international: FR9500281
(87) Numéro de publication internationale: WO9524323

(56) Documents cités:
- EP-A- 0 197 839
- EP-A- 0 199 187
- DE-A- 3 318 025
- DE-A- 3 635 353

## Description

L'invention concerne un dispositif permettant de modifier la température d'un flux d'air à envoyer dans l'habitacle d'un véhicule, par échange de chaleur avec un évaporateur dans lequel circule un fluide qui passe également dans un compresseur et dans un détendeur, ce dispositif comprenant une boucle principale de circulation de fluide composée d'une première branche contenant un évaporateur suivi d'un compresseur et d'une seconde branche contenant un condenseur, la boucle principale contenant également un premier détendeur interposé entre le condenseur et l'évaporateur, et des moyens pour envoyer dans l'habitacle de l'air ayant subi un échange de chaleur avec l'évaporateur, ce dispositif comprenant en outre une troisième branche ne contenant pas de condenseur, placée en parallèle avec la seconde branche de façon à former avec la première branche une branche secondaire.

Un tel dispositif, comme décrit dans le document EP-A-197 839, est utilisé de façon classique pour la climatisation de l'habitacle du véhicule, notamment d'un véhicule à moteur thermique.

Lorsqu'il s'agit de réchauffer l'air à envoyer dans l'habitacle, on utilise habituellement la chaleur produite par le moteur thermique, par exemple en faisant passer le flux d'air en contact avec un radiateur de chauffage traversé par un fluide de refroidissement du moteur.

Lorsque le moteur est froid, on ne peut en tirer de la chaleur pour le chauffage de l'habitacle, ce qui retarde le moment ou celui-ci se trouve à la température souhaitée et nuit donc au confort des occupants.

Pour accélérer la mise en température de l'habitacle, on peut avoir recours à des dispositifs supplémentaires comportant notamment des brûleurs ou des radiateurs électriques, qui impliquent des investissements importants.

Comme cela est décrit dans le document EP-A-0 197 839, il est prévu de disposer une vanne trois voies à l'intersection de la troisième branche et de la seconde branche de façon à faire circuler le fluide frigorigène de la sortie du compresseur directement à l'entrée de l'évaporateur sans passer par le condenseur.

Grâce à cette disposition, il est obtenu un mode de réchauffage du fluide d'air par échange de chaleur avec l'évaporateur.

Cette disposition présente néanmoins un inconvénient non négligeable par la présence de la vanne trois voies.

En effet, malgré tout le soin apporté dans la réalisation de la vanne trois voies, celle-ci peut présenter des fuites qui feront en sorte que, en mode de réchauffage, le fluide frigorigène sortant du compresseur circule non seulement dans la troisième branche mais également dans la seconde branche.

Par cette circulation non désirée, dans la seconde branche, le fluide frigorigène va traverser le condenseur en se condensant, arriver à l'entrée de l'évaporateur sous forme liquide qui va se mélanger avec le fluide gazeux de la troisième branche et entraîne ainsi une baisse des performances de cet évaporateur.

Le but de l'invention est de permettre un chauffage rapide de l'habitacle lorsque le moteur thermique est froid, sans avoir recours à des moyens spécifiques coûteux.

L'invention vise notamment un dispositif du genre défini en introduction et prévoit qu'il comprend au moins deux premières vannes et une seconde vanne placées respectivement dans la seconde branche et dans la troisième branche, les premières vannes étant fermées lorsque la seconde vanne est ouverte pour commander la circulation du fluide dans la boucle secondaire et les premières vannes étant ouvertes lorsque la seconde vanne est fermée pour commander la circulation du fluide dans la boucle principale.

Le mode de réchauffage, utilisable pour le chauffage de l'habitacle lorsque le moteur est froid, utilise ainsi l'installation de climatisation existant, avec des modifications mineures.

Grâce à cette disposition, aussi bien en mode climatisation qu'en mode réchauffage, seul est autorisé la circulation du fluide dans les boucles désirées.

Le dispositif selon l'invention peut comporter au moins certaines des particularités suivantes :
- Les deux premières vannes sont placées dans la seconde branche de part et d'autre du condenseur.
- Le premier détendeur est dans la seconde branche et un second détendeur est prévu dans la boucle secondaire.
- Le second détendeur est placé dans la troisième branche.
- Le second détendeur est placé dans la première branche, ainsi qu'une vanne supplémentaire commandée de façon à court-circuiter celui-ci pour en détourner le fluide lorsque ce dernier circule dans la boucle principale.
- Il comprend un détendeur unique placé dans la première branche.

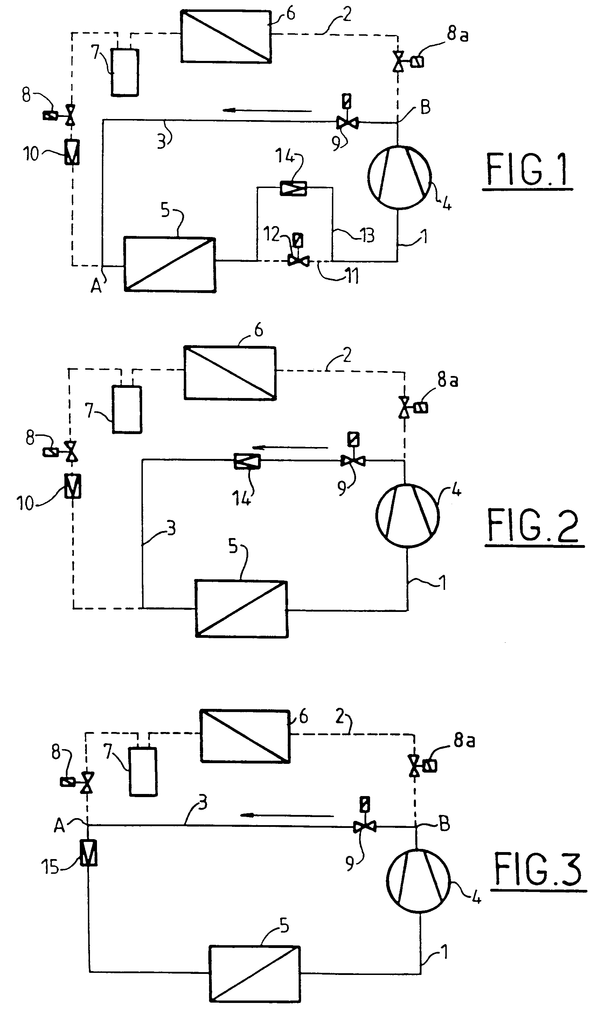

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins, les figures 1 à 3 sont des schémas de circuits de fluide de trois dispositifs selon l'invention, pour la climatisation et le chauffage de l'habitacle d'un véhicule.

Dans ces circuits circule un fluide propre à passer de l'état liquide à l'état gazeux en absorbant de la chaleur, et de l'état gazeux à l'état liquide en cédant de la chaleur, comme c'est le cas de façon habituelle dans les installations de climatisation de véhicules. Les composants de ces circuits sont également rencontrés de façon habituelle dans ces mêmes installations de climatisation.

Chacun des circuits illustrés comprend trois branches 1, 2 et 3 se raccordant entre elles en deux points de jonction A et B, les branches 1 et 3 étant représentées en trait plein et la branche 2 en trait interrompu. La branche 1 contient un compresseur 4 qui y fait circuler le fluide du point A vers le point B, et un évaporateur 5 placé en amont du compresseur. La branche 2 contient, du point B vers le point A, une électrovanne amont 8a, un condenseur 6, une bouteille 7 et une électrovanne aval 8. Une électrovanne d'arrêt 9 est également disposée dans la branche 3.

Dans le circuit de la figure 1, un détendeur 10 la est placé en aval de l'électrovanne 8 dans la branche 2. La branche 1, entre l'évaporateur 5 et le compresseur 4, est subdivisée en deux sous-branches en parallèle, à savoir une sous-branche 11 contenant une troisième électrovanne 12 et une sous-branche 13 contenant un second détendeur 14. Les électrovannes 8, 8a et 12 sont commandées conjointement, et en opposition par rapport à l'électrovanne 9. Lorsque les vannes 8, 8a et 12 sont ouvertes et la vanne 9 fermée, le fluide circule dans une boucle fermée formée par les branches 1, y compris la sous-branche il, et 2, et ne circule pas dans la branche 3 ni dans la sous-branche 13. Cette boucle fonctionne comme un circuit classique de climatisation, le fluide passant de l'état liquide à l'état gazeux dans l'évaporateur 5 en absorbant de la chaleur du flux d'air et passant de l'état gazeux à l'état liquide dans le condenseur 6 en cédant de la chaleur. La chaleur absorbée dans l'évaporateur 5 peut être prélevée, directement ou indirectement, du flux d'air qui est envoyé dans l'habitacle du véhicule.

Lorsque les vannes 8, 8a et 12 sont fermées et la vanne 9 ouverte, le fluide circule dans une boucle fermée constituée par les branches 1, y compris la sous-branche 13, et 3, et ne circule pas dans la branche 2 ni dans la sous-branche 11, comme indiqué par le trait interrompu sur la figure. Le fluide traverse donc le compresseur 4, l'évaporateur 5 et le détendeur 14. Ne traversant plus le condenseur, il reste en permanence à l'état gazeux et le détendeur 14 est réglé de telle manière que le fluide frigorigène en sortie de ce détendeur soit toujours à l'état gazeux, ces réglages étant réalisés à partir de paramètres tels que la pression et la température du fluide.

L'évaporateur 5 ne joue donc plus le rôle d'évaporateur, mais continue de jouer le rôle d'échangeur de chaleur, permettant de dissiper une grande partie de la chaleur produite par la compression du fluide dans le compresseur 4, cette chaleur pouvant être utilisée pour le chauffage de l'habitacle lorsque le moteur thermique du véhicule est froid. En particulier, le fluide en circulation étant à une température supérieure à la température ambiante, un flux d'air à envoyer dans l'habitacle peut être chauffé directement au contact de l'évaporateur. La présence des deux électrovannes 8a et 8 au lieu d'une seule permet d'isoler le condenseur et d'éviter des transferts de fluide parasites par suite des changements de volume du fluide qu'il contient. L'ensemble des vannes 8a et 9 peut être remplacé par une vanne à trois voies.

Le circuit de la figure 2 diffère de celui de la figure 1 en ce que les sous-branches 11 et 13 et l'électrovanne 12 sont supprimées, le détendeur 14 étant transféré dans la branche 3. Comme précédemment, les électrovannes 8 et 8a d'une part et 9 d'autre part sont commandées en opposition pour fermer soit la boucle composée des branches 1 et 2, soit celle composée des branches 1 et 3. Le fonctionnement du dispositif en mode de climatisation est inchangé. En mode de réchauffage, seul l'ordre des composants est modifié, le détendeur 14 étant traversé entre le compresseur 4 et l'évaporateur 5, ce qui ne change rien au résultat.

Le circuit de la figure 3 est encore simplifié par rapport à celui de la figure 2, puisqu'il comporte un seul détendeur 15 placé dans la branche 1, en amont de l'évaporateur 5. Ce détendeur unique joue le rôle du détendeur 10 de la figure 2 en mode climatisation et celui du détendeur 14 en mode réchauffage, sans aucun changement pour le fluide.

Les électrovannes utilisées dans les exemples décrits peuvent être remplacées par des vannes à commande manuelle, hydraulique, pneumatique ou autre.

## Revendications

1. Dispositif de climatisation de l'habitacle d'un véhicule automobile, comprenant une boucle principale (1, 2) de circulation de fluide composée d'une première branche (1) contenant un évaporateur (5) suivi d'un compresseur (4) et d'une seconde branche (2) contenant un condenseur (6), la boucle principale contenant également un premier détendeur (10) interposé entre le condenseur et l'évaporateur, et des moyens pour envoyer dans l'habitacle de l'air ayant subi un échange de chaleur avec l'évaporateur, ce dispositif comprenant en outre une troisième branche (3) ne contenant pas de condenseur, placée en parallèle avec la seconde branche de façon à former avec la première branche une boucle secondaire (1,3), caractérisé en ce que le dispositif comprend au moins deux premières vannes (8,8a) et une seconde vanne (9) placées respectivement dans la seconde branche et dans la troisième branche, les premières vannes étant fermées lorsque la seconde vanne est ouverte pour commander la circulation du fluide dans la boucle secondaire et les premières vannes étant ouvertes lorsque la seconde vanne est fermée pour commander la circulation du fluide dans la branche principale.

2. Dispositif selon la revendication 1, caractérisé en ce que les deux premières vannes (8,8a) sont placées dans la seconde branche de part et d'autre du condenseur.

3. Dispositif selon l'une des revendications 1 ou 2, caractérisé en ce que le premier détendeur (10) est dans la seconde branche et qu'un second détendeur (14) est prévu dans la boucle secondaire.

4. Dispositif selon la revendication 3, caractérisé en ce que le second détendeur (14) est placé dans la troisième branche (3).

5. Dispositif selon la revendication 3, caractérisé en ce que le second détendeur (14) est placé dans la première branche ainsi qu'une vanne supplémentaire (12) commandée de façon à court-circuiter celui-ci pour en détourner le fluide lorsque ce dernier circule dans la boucle principale.

6. Dispositif selon la revendication 5, caractérisé en ce que le détendeur (14) comporte des réglages permettant au fluide de rester à l'état gazeux à la sortie dudit détendeur.

7. Dispositif selon l'une des revendications 1 ou 2, caractérisé en ce qu'il comprend un détendeur unique (15) placé dans la première branche.

## Claims

1. Air conditioning apparatus for the cabin of a motor vehicle, comprising a main fluid flow loop (1, 2) consisting of a first branch (1) containing an evaporator (5) followed by a compressor (4), and a second branch (2) containing a condenser (6), the main loop also containing a first expansion device (10) interposed between the condenser and the evaporator, and means for delivering into the cabin air which has undergone heat exchange with the evaporator, the said apparatus further including a third branch (3) containing no condenser and connected in parallel with the second branch so as to constitute, with the first branch, a secondary loop (1, 3), characterised in that the apparatus includes at least two first valves (8, 8a) and one second valve (9), which are connected in the second branch and the third branch respectively, the first valves being closed when the second valve is open so as to cause the fluid to flow in the secondary loop, and the first valves being open when the second valve is closed so as to cause the fluid to flow in the main loop.

2. Apparatus according to Claim 1, characterised in that the two first valves (8, 8a) are connected in the second branch on either side of the condenser.

3. Apparatus according to Claim 1 or Claim 2, characterised in that the first expansion device is in the second branch, and in that a second expansion device (14) is arranged in the secondary loop.

4. Apparatus according to Claim 3, characterised in that the second expansion device (14) is connected in the third branch (3).

5. Apparatus according to Claim 2, characterised in that the second expansion device (14) is connected in the first branch, together with a supplementary valve (12), which is so controlled as to short-circuit the latter whereby to divert the fluid therefrom when the fluid is flowing in the main loop.

6. Apparatus according to Claim 5, characterised in that the expansion device (14) has adjustments for enabling the fluid to remain in the gaseous state at the outlet of the said expansion device.

7. Apparatus according to Claim 1 or Claim 2, characterized in that it has a single expansion device (15) connected in the first branch.

## Patentansprüche

1. Heizungsanlage für den Fahrgastraums eines Kraftfahrzeugs, umfassend einen Hauptkreislauf (1, 2) für die Fluidzirkulation, der aus einem ersten Strang (1), der einen Verdampfer (5) mit einem nachfolgenden Kompressor (4) enthält, und aus einem zweiten Strang (2) besteht, dar einen Kondensator (6) enthält, wobei der Hauptkreislauf außerdem ein erstes Druckminderventil (10) enthält, das zwischen dem Kondensator und dem Verdampfer eingefügt ist, und Mittel, um in den Fahrgastraum Luft einzuleiten, an der ein Wärmeaustausch mit dem Verdampfer erfolgt ist, wobei diese Anlage außerdem einen dritten Strang (3) umfaßt, der keinen Kondensator enthalt und der mit dem zweiten Strang parallel geschaltet ist, um zusammen mit dem ersten Strang einen Sekundärkreislauf (1, 3) zu bilden, **dadurch gekennzeichnet,** daß die Anlage mindestens zwei erste Ventile (8, 8a) und ein zweites Ventil (9) umfaßt, die im zweiten Strang bzw. im dritten Strang angeordnet sind, wobei die ersten Ventile geschlossen sind, wenn das zweite Ventil geöffnet ist, um die Zirkulation des Fluids im Sekundärkreislauf zu bewirken, während die ersten Ventile geöffnet sind, wenn das zweite Ventil geschlossen ist, um die Zirkulation des Fluids im Hauptkreislauf zu bewirken.

2. Anlage nach Anspruch 1,**dadurch gekennzeichnet,** daß die ersten Ventile (8, 8a) im zweiten Strang beiderseits des Kondensators angeordnet sind.

3. Anlage nach einem der Ansprüche 1 oder 2, **dadurch gekennzeichnet,** daß sich das erste Druckminderventil (10) im zweiten Strang befindet und daß ein zweites Druckminderventil (14) im Sekundärkreislauf vorgesehen ist.

4. Anlage nach Anspruch 3,**dadurch gekennzeichnet,** daß das zweite Druckminderventil (14) im dritten Strang angeordnet ist.

5. Anlage nach Anspruch 3,**dadurch gekennzeichnet,** daß das zweite Druckminderventil (14) im ersten Strang angeordnet ist, ebenso wie ein zusätzliches Ventil (12), das so gesteuert wird, daß dieses überbrückt wird, um das Fluid umzuleiten, wenn es im Hauptkreislauf zirkuliert.

6. Anlage nach Anspruch 5,**dadurch gekannzeichnet,** daß das Druckminderventil (14) Einstellungen aufweist, die es dem Fluid ermöglichen, am Ausgang des besagten Druckminderventils im gasförmigen Zustand zu bleiben.

7. Anlage nach einem der Ansprüche 1 oder 2, **dadurch gekennzeichnet,** daß sie ein einziges Druckminderventil (15) umfaßt, das im ersten Strang angeordnet ist.
